(19) Europäisches Patentamt
European Patent Office
Office européen des brevets

(11) EP 4 654 436 A1

(12) EUROPÄISCHE PATENTANMELDUNG

(43) Veröffentlichungstag:
26.11.2025 Patentblatt 2025/48

(21) Anmeldenummer: 25170535.6

(22) Anmeldetag: 15.04.2025

(51) Internationale Patentklassifikation (IPC):
H02J 50/10 (2016.01)          H02J 50/80 (2016.01)

(52) Gemeinsame Patentklassifikation (CPC):
H02J 50/10; H02J 50/80

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH LA MA MD TN

(30) Priorität: 17.04.2024 DE 102024110761

(71) Anmelder: Universität Stuttgart Körperschaft des
Öffentlichen Rechts
70174 Stuttgart (DE)

(72) Erfinder:
• Noeren, Jannis
70174 Stuttgart (DE)
• Elbracht, Lukas
70174 Stuttgart (DE)

(74) Vertreter: RGTH
Patentanwälte PartGmbB
Neuer Wall 10
20354 Hamburg (DE)

(54) **VERFAHREN ZUM FESTSTELLEN EINER AUFNAHME- UND/ODER ABGABEBEREITSCHAFT VON KONTAKTLOS ZU ÜBERTRAGENDER ENERGIE UND VORRICHTUNG ZUR KONTAKTLOSEN ENERGIEÜBERTRAGUNG**

(57) Es wird ein Verfahren (100) zum Feststellen (104) einer Aufnahme- und/oder Abgabebereitschaft von kontaktlos zu übertragender Energie eines Energieübertragungspartners einer Vorrichtung (10) zur kontaktlosen Energieübertragung vorgeschlagen, wobei die Vorrichtung (10) einen ersten Energieübertragungspartner (11) und einen zweiten Energieübertragungspartner (12) umfasst, wobei jeder Energieübertragungspartner mindestens eine Spule (11a, 12a) umfasst. Das Verfahren (100) umfasst ein Feststellen (103) einer induzierten Spannung in der Spule (11a, 12a) des ersten Energieübertragungspartners (11) und/oder des zweiten Energieübertragungspartners (12) auf Basis eines Anklopfsignals des jeweils anderen Energieübertragungspartners.

Fig. 1

EP 4 654 436 A1

**Beschreibung**

Die vorliegende Erfindung betrifft ein Verfahren zum Feststellen einer Aufnahme- und/oder Abgabebereitschaft von kontaktlos zu übertragender Energie sowie eine Vorrichtung zur kontaktlosen Energieübertragung nach den unabhängigen Ansprüchen.

Vorrichtungen zur kontaktlosen Energieübertragung sind aus dem Stand der Technik grundsätzlich bekannt. Die kontaktlose Energieübertragung kann induktiv erfolgen. Dabei übertragen Energieübertragungspartner mit Hilfe von Spulen induktiv Energie. Einer der Energieübertragungspartner gibt Energie ab, die der andere Energieübertragungspartner aufnimmt. Dabei besteht vor allem die Anforderung einen Abnehmer von kontaktlos zu übertragender Energie zu erkennen, um beispielsweise in Folge die Energieübertragung zu beginnen. Auch besteht Interesse, die Energieübertragung zu unterbrechen, wenn der energieaufnehmende Energieübertragungspartner keine Energie mehr aufnehmen kann oder möchte.

Der vorliegenden Erfindung liegt somit die Aufgabe zugrunde, ein Verfahren zum Feststellen einer Aufnahme- und/oder Abgabebereitschaft von kontaktlos zu übertragender Energie eines Energieübertragungspartners einer Vorrichtung zur kontaktlosen Energieübertragung derart zu verbessern, dass eine Aufnahme- und/oder Abgabebereitschaft möglichst schnell und zuverlässig sowie mit möglichst geringen verbundenen Kosten und geringem Aufwand festgestellt wird.

Gelöst wird die vorgenannte Aufgabe durch ein Verfahren zum Feststellen einer Aufnahme- und/oder Abgabebereitschaft von kontaktlos zu übertragender Energie eines Energieübertragungspartners einer Vorrichtung zur kontaktlosen Energieübertragung, wobei die Vorrichtung zumindest einen ersten und zumindest einen zweiten Energieübertragungspartner umfasst. Beide Energieübertragungspartner umfassen mindestens je eine Spule.

Das Verfahren kann ferner ein Erzeugen eines Anklopfsignals mit einem Wechselanteil in der Spule des ersten und/oder zweiten Energieübertragungspartners zur Induktion einer Spannung in einer Spule des jeweils anderen Energieübertragungspartners umfassen. Das Verfahren ist vor allem computer-implementiert.

Bei dem Anklopfsignal mit einem Wechselanteil kann es sich um ein periodisches Wechselsignal, beispielsweise ein Wechselspannungssignal, handeln. Dies kann durch ein Wechselstromsignal ausgelöst werden. Ein Wechselanteil kann jedoch bereits eine unstetige Änderung des Signals sein, bspw. ein Sprung, um eine entsprechende Induktion auszulösen. Bei dem Anklopfsignal handelt es sich vor allem nicht um ein digital moduliertes Signal, sondern vorzugsweise um ein einfaches Signal mit Wechselspannungsanteil.

Das Anklopfsignal wird induktiv zwischen den Spulen der unterschiedlichen Energieübertragungspartner übertragen und löst eine induzierte Spannung in der Spule des anderen Energieübertragungspartners aus.

Das Verfahren umfasst ein Feststellen der induzierten Spannung auf Basis des Anklopfsignals in der Spule des anderen Energieübertragungspartners. Es kann somit entweder der energieabgebende Energieübertragungspartner ein Anklopfsignal erzeugen und somit dem Energieübertragungspartner, der Energie aufnehmen möchte, signalisieren, dass er Energie abgeben kann. Oder andersherum erzeugt der energieaufnehmende Energieübertragungspartner ein Anklopfsignal und signalisiert somit dem energieabgebenden Energieübertragungspartner die Bereitschaft Energie, in anderen Worten Nutzenergie, aufzunehmen. Wenn somit eine induzierte Spannung auf Basis des Anklopfsignals bei einem Energieübertragungspartners festgestellt wird, weiß dieser Energieübertragungspartner, dass der andere Energieübertragungspartner das Anklopfsignal ausgesandt hat und es kann daher ein Rückschluss auf die Aufnahme- und/oder Abgabebereitschaft gezogen werden. Bei dem Anklopfsignal handelt es sich vorzugsweise um ein Wakeup-Signal, die die entsprechende Aufnahme- und/oder Abgabebereitschaft von kontaktlos zu übertragender Energie signalisiert.

Vorzugsweise ist einer der Energieübertragungspartner stationär ausgebildet. Dies ist typischerweise der energieabgebende Energieübertragungspartner. Der andere Energieübertragungspartner ist vor allem mobil ausgebildet, wobei dies typischerweise der energieaufnehmende Energieübertragungspartner ist.

Vor allem wird eine Aufnahme- und/oder Abgabebereitschaft festgestellt, wenn eine induzierte Spannung auf Basis des Anklopfsignals festgestellt wird. Am meisten bevorzugt wird eine Aufnahme- und/oder Abgabebereitschaft dann festgestellt, wenn die induzierte Spannung eine vordefinierte Schwelle überschreitet. In anderen Worten kann eine Mindestspannung definiert werden. Die Schwelle kann ein bis zehn Prozent der Spannung betragen, die der Nutzenergieübertragung zugeordnet ist.

Bei der Spule, die das Anklopfsignal überträgt, handelt es sich insbesondere um eine Spule der Vorrichtung, die zur Energieübertragung geeignet ist, in anderen Worten um eine Energieübertragungsspule. In anderen Worten handelt es sich um eine Spule des Energieübertragungspartners, die zur Übertragung einer Nutzenergie geeignet ist. Bei der Nutzenergie handelt es sich um die auf der energieaufnehmenden Seite nutzbare Energie, die zwischen den Energieübertragungspartnern ausgetauscht werden soll. Sie kann auch als Nutzsignal verstanden werden. In anderen Worten kann die jeweilige eine Spule der Energieübertragungspartner sowohl zur Übertragung des Anklopfsignals als auch zur Übertragung der Nutzenergie ausgebildet sein. Somit sind die Komplexität des Verfahrens und der entsprechenden Vorrichtung sowie die notwendigen Materialkosten reduziert, da keine separaten Mittel für die Übertragung des Anklopfsignals vorgesehen sein müssen.

Es kann bevorzugt sein, dass mindestens ein Energieübertragungspartner, vorzugsweise der stationäre, zumindest zwei Spulen zur Energieübertragung und somit zur Übertragung des Anklopfsignals umfasst, was eine effizientere Energieübertragung ermöglicht und die Kapazität für die Energieübertragung erhöht. Die Effizienz bezieht sich dabei vor allem auf die Erhöhung der relativen lateralen Positionierung der Spulen bei der Energieübertragung, mit anderen Worten funktioniert das Energieübertragungssystem bei Verschiebung der Spulen zueinander besser. Alternativ können beide Energieübertragungspartner mehrere entsprechende Spulen umfassen oder jeder Energieübertragungspartner kann genau eine oben beschriebene Spule enthalten.

Die Erzeugung eines Anklopfsignals und die darauf basierende Feststellung der induzierten Spannung in der Spule des jeweils anderen Energieübertragungspartners ist ein zentraler Bestandteil der vorliegenden Erfindung, insbesondere im Kontext der kontaktlosen Energieübertragung. Diese Prozesse werden vorrangig vor der eigentlichen kontaktlosen Übertragung der Nutzenergie durchgeführt. Sobald auf Basis des Anklopfsignals eine induzierte Spannung - und vorzugsweise die Aufnahme- und/oder Abgabebereitschaft - festgestellt wird, initiiert einer der Energieübertragungspartner die kontaktlose Übertragung der Nutzenergie.

Das Feststellen einer induzierten Spannung auf Grundlage des Anklopfsignals kann somit eine essenzielle Voraussetzung für die Initiierung der Energieübertragung sein. Insbesondere wird die Übertragung der Nutzenergie durch den energieabgebenden Partner eingeleitet, sobald eine induzierte Spannung auf Basis des Anklopfsignals des energieaufnehmenden Partners beim energieabgebenden Partner detektiert wird. Die Übertragung der Nutzenergie erfolgt durch das Aktivieren eines Inverters, welcher ein magnetisches Wechselfeld zur Nutzenergieübertragung in der Spule des energieabgebenden Partners hervorruft.

Darüber hinaus kann die Erzeugung eines Anklopfsignals und die Feststellung der induzierten Spannung auf Basis des Anklopfsignals während einer laufenden kontaktlosen Übertragung der Nutzenergie erfolgen. Dies ermöglicht es, das Verfahren sowohl vor als auch während der Energieübertragung zu nutzen. Hierbei können sich das Nutzsignal und die Energie des Anklopfsignals, die beide induktiv übertragen werden, überlagern, was zu einer effizienten und kontinuierlichen Energieübertragung beiträgt.

Wenn eine induzierte Spannung auf Basis des Anklopfsignals fehlt, das heißt, es wird festgestellt, dass der andere Energieübertragungspartner kein Anklopfsignal mehr aussendet, kann die kontaktlose Übertragung der Nutzenergie eingestellt werden. Dies tritt vor allem ein, wenn keine Aufnahmebereitschaft mehr vorliegt, beispielsweise weil der energieaufnehmende Partner keine Energie mehr aufnehmen kann oder möchte. In einem solchen Fall kann der energieabgebende Energieübertragungspartner, nach Feststellung des Fehlens eines Anklopfsignals vom energieaufnehmenden Partner, die Übertragung der Nutzenergie beenden. Vorzugsweise wird in diesem Kontext die Erzeugung der Nutzenergie, in anderen Worten das Wechselfeld zur Nutzenergieübertragung, durch den energieabgebenden Partner in dessen Spule eingestellt. Vor allem wird das Anklopfsignal in regelmäßigen Abständen oder kontinuierlich übertragen, um somit während der Nutzenergieübertragung die Abgabe- und/oder Aufnahmebereitschaft zu überwachen oder zu signalisieren.

Es kann somit nicht nur besonders schnell eine Aufnahme- und/oder Abgabebereitschaft von kontaktlos zu übertragender Energie festgestellt werden, sondern während der Energieübertragung festgestellt werden, dass die energieaufnehmende Seite keine Energie mehr aufnehmen kann oder möchte, was ferner die Effizienz der kontaktlosen Übertragung von Energie erhöht.

In der vorliegenden Erfindung wird die induzierte Spannung insbesondere indirekt durch Messung eines Stroms auf Seiten des jeweils anderen Energieübertragungspartners festgestellt. Die durch das Anklopfsignal induzierte Spannung führt zu einem messbaren Strom. Zusätzlich besteht die Möglichkeit, die induzierte Spannung zu messen. Bei einer Überlagerung des durch die Nutzenergieübertragung hervorgerufenen Signalanteils und des Signalanteils des Anklopfsignals basiert die Änderung des Stroms oder der Spannung sowohl auf dem durch die Nutzenergieübertragung hervorgerufenen Signalanteil als auch auf dem Signalanteil des Anklopfsignals.

Vorzugsweise umfasst jeder Energieübertragungspartner einen Konverter um Gleichstrom in Wechselstrom umzuwandeln beziehungsweise Wechselstrom in Gleichstrom umzuwandeln. Auf der energieabgebenden Seite wird der Konverter als Inverter bezeichnet, während dieser auf der energieaufnehmenden Seite als Gleichrichter bezeichnet wird. Beispielsweise kann der Inverter identisch zum Gleichrichter sein.

Jeder Konverter kann als aktive Schaltung, insbesondere als Vollbrückenwandler, mit mehreren Schaltern ausgebildet sein. Er umfasst vor allem vier Schalter, die jeweils als Transistor ausgebildet sein können. Im Detail können die Schalter des Konverters mit jeweiligen Steuersignalen angesteuert werden, um Spannungsteile eines Wechselspannungssignals in ein Gleichspannungssignal einfließen zu lassen. In anderen Worten werden mittels der aktiven Schaltung eine Wechselspannung oder ein Wechselstrom in eine Gleichspannung bzw. einen Gleichstrom umgewandelt. Andersherum können die Schalter derart angesteuert werden, um aus einer Gleichspannung oder einem Gleichstrom eine Wechselspannung bzw. einen Wechselstrom zu erzeugen.

Grundsätzlich ist die Messung des Stroms an unterschiedlichen Stellen möglich. Vorzugsweise weist jeder Energieübertragungspartner eine Kompensationsschaltung auf. Diese ist vor allem hinter der Spule und somit zwischen dem Inverter bzw. Gleichrichter und der Spule angeordnet. Bei der Kompensationsschaltung handelt es sich vorzugsweise um einen kapazitiven Kompensationsschaltkreis, bspw. um einen LCC-Kompensationsschaltkreis. Dieser kann vor allem eine Induktivität, bspw. einen induktiven Widerstand, und zwei Kondensatoren aufweisen. Die Kompensationsschaltung dient dazu den Blindleistungsbedarf der Spule zu kompensieren, damit der Inverter und/oder der Gleichrichter die Blindleistung nicht bereitstellen müssen.

Gemessen werden kann der Strom, der auf der induzierten Spannung basiert, zwischen dem Inverter bzw. dem Gleichrichter und der Kompensationsschaltung. Der Strom kann vor allem an einem Ausgang des Inverters oder an einem Eingang des Gleichrichters gemessen werden. Ferner kann der Strom zwischen einer entsprechenden Kompensationsschaltung und der Spule gemessen werden, in anderen Worten nach der Kompensationsschaltung. Eine weitere Möglichkeit wäre den Strom vor dem Inverter beziehungsweise Gleichrichter zu messen. Auch wäre eine Spannungserfassung am Zwischenkreises des Inverters bzw. des Gleichrichters möglich, an dem die Spannung am Inverter beziehungsweise Gleichrichter gemessen wird.

Wird der Strom zwischen dem Inverter bzw. Gleichrichter und einer Kompensationsschaltung gemessen, kann ein Stromsensor eingesetzt werden, der ohnehin zur Überwachung eines maximalen Stroms des Inverters beziehungsweise des Gleichrichters dient, um einen entsprechenden Überstrom zu vermeiden. Es wird somit kein separater Stromsensor eingesetzt.

Die Nutzenergie und das Anklopfsignal sind unterscheidbar. Insbesondere weisen die Nutzenergie und das Anklopfsignal jeweils eine Frequenz auf, wobei die Frequenzen orthogonal zueinander sind. Darunter ist vor allem zu verstehen, dass das Anklopfsignal und das Signal der Nutzenergie, in anderen Worten das Nutzsignal, orthogonal zueinander sind. Dabei kann das Anklopfsignal, das der erste Energieübertragungspartner erzeugt, eine andere Frequenz aufweisen als das Anklopfsignal, das der andere Energieübertragungspartner erzeugt, um auch die entsprechenden Anklopfsignale voneinander unterscheiden zu können. So kann jede Seite ein entsprechendes Anklopfsignal aussenden und das eigene Signal von dem Anklopfsignal des anderen Energieübertragungspartners unterscheiden und somit die Abgabe- und/oder Aufnahmebereitschaft des anderen Energieübertragungspartners feststellen. Insbesondere wird orthogonales Frequency-Division Multiplexing (OFDM) verwendet. In anderen Worten wird das Funktionsprinzip des OFDM verwendet. So entsprechen die orthogonalen Signale den Trägern im Sinne des OFDM.

Ferner kann jeder Energieübertragungspartner ein erstes Anklopfsignal für die Aufnahmebereitschaft und ein zweites Anklopfsignal für die Abgabebereitschaft erzeugen. Somit kann der jeweils andere Energieübertragungspartner feststellen, ob die andere Seite Energie aufnehmen oder abgeben möchte und somit eine Aufnahme- oder Abgabebereitschaft besteht. Dabei können sich die beiden Anklopfsignale unterscheiden. In einer Ausführungsform können somit insgesamt vier Anklopfsignale übertragen werden, die sich alle unterscheiden. Wird somit eine induzierte Spannung auf Basis eines Anklopfsignals für die Aufnahmebereitschaft seitens des ersten Energieübertragungspartners feststellt, kann der zweite Energieübertragungspartner die Übertragung der Nutzenergie beginnen. Dabei reicht vor allem nur das Erkennen des Anklopfsignals. In anderen Worten reicht die Erkennung eines Wechselsignals, sodass nach dem Erkennen die Übertragung direkt beginnen kann. Das Erkennen weiterer Informationen zur expliziten Meldung einer Ladeaufnahmebereitschaft, bspw. eine entsprechende digitale Nachricht oder Code, ist nicht zwingend notwendig. Fehlt bspw. eine induzierte Spannung auf Basis eines Anklopfsignals für die Aufnahmebereitschaft seitens des ersten Energieübertragungspartners, kann die Energieübertragung beendet werden.

Eine Unterscheidbarkeit der Nutzenergie und des mindestens einen Anklopfsignals dient dazu, um das Anklopfsignal von der Nutzenergie zu unterscheiden und die entsprechende Aufnahme- und/oder Abgabebereitschaft festzustellen. Insbesondere sind die induzierte Spannung, die der Nutzenergie zugeordnet werden kann, und die induzierte Spannung, die dem Anklopfsignal zugeordnet werden kann, unterscheidbar.

Das Verfahren umfasst insbesondere eine Frequenzanalyse, um einen Anteil der induzierten Spannung basierend auf dem Anklopfsignal und einem Anteil, der der Übertragung der Nutzenergie zugeordnet ist, zu trennen, da wie oben beschrieben, sich deren Frequenzen unterscheiden können.

Die Frequenzen weisen vorzugsweise ein zumindest im Wesentlichen rationales, vor allem gebrochen-rationales, Verhältnis zueinander auf. In anderen Worten wird das gebrochene-rationale Verhältnis zumindest annähernd erfüllt. Vorzugsweise weicht das Verhältnis des Anklopfsignals zum Nutzenergie höchstens 5 %, ferner bevorzugt höchstens 20 %, zu einem gebrochen-rationalen Verhältnis ab.

Orthogonalität besteht vorzugsweise genau dann, wenn gilt:

$$f_v = \frac{v}{T}, \quad f_w = \frac{w}{T}, \quad w, v \in \mathbb{N}$$

Wenn v und w aus der Menge der natürlichen Zahlen stammen, haben die beiden Frequenzen ein gebrochen rationales Verhältnis. Der Betrachtungszeitraum der Signale im Zeitbereich (für die anschließende Transformation in den Frequenzbereich) ist hier mit T bezeichnet. Wenn T bspw. 1ms ist, v = 100 und w = 120, weisen die beiden orthogonalen Signale eine Frequenz von 100 kHz bzw. 120 kHz auf. Für diese drei Bedingungen sind die erfassten Signale zueinander orthogonal und beeinflussen sich nicht gegenseitig. Folglich können die Signale sehr präzise voneinander unterschieden werden, auch wenn beide Signale eine sehr unterschiedliche Amplitude aufweisen. Das Prinzip der Orthogonalität kann sich auf mehr als zwei Signale beziehen, die jeweils orthogonal zueinander sein können.

Vorzugsweise unterscheiden sich die Frequenz des Anklopfsignals und die Frequenz der Nutzenergieübertragung beziehungsweise der unterschiedlichen Anklopfsignale ferner untereinander. Die Frequenz des Anklopfsignals bzw. das Anklopfsignal, und die Frequenz der Nutzenergieübertragung bzw. das Nutzsignal können orthogonal zueinander sein. Dies kann auch die Frequenzen unterschiedlicher Anklopfsignale bzw. unterschiedliche Anklopfsignale betreffen. In anderen Worten können verschiedene Anklopfsignale orthogonal zueinander sein. Beispielhaft kann die Frequenz zur Übertragung der Nutzenergie 400 kHz sein und die Frequenz des Anklopfsignals 300 kHz. Ein weiteres Beispiel wären Frequenzen von 100 kHz, 120 kHz und 130 kHz bei einem Betrachtungszeitraum von T gleich einer ms für drei Signale, bspw. das Nutzsignal und zwei Anklopfsignale.

Die Wahl orthogonaler Frequenzen bzw. orthogonaler Signale führt dazu, dass die Signale im Frequenzbereich gut unterscheidbar sind. Insbesondere umfasst das Anklopfsignal eine gegenüber der Nutzenergie deutlich reduzierte Amplitude, sodass eine Unterscheidbarkeit im Frequenzbereich essentiell zur Feststellung des Anklopfsignals sein kann. Das Anklopfsignal kann eine Amplitude aufweisen, die einem Prozent bis zehn Prozent der Amplitude der Nutzenergie entspricht.

Unter einer Frequenzanalyse ist insbesondere eine Umwandlung des gemessenen Stroms oder der gemessenen Spannung über die Zeit in den Frequenzbereich zu verstehen, wobei im Frequenzbereich die Frequenzen der Nutzenergie und des Anklopfsignals beziehungsweise der unterschiedlichen Anklopfsignale voneinander trennbar sind. Die Frequenzanalyse kann vor allem ein Abtasten der gemessenen Spannung oder des Stroms die über die Zeit gemessen wird, umfassen, beispielsweise mit einem Abtastintervall zwischen 500 ns und 2 μs.

Somit ist deutlich zu erkennen, ob ein Anteil der induzierten Spannung auf dem Anklopfsignal basiert und somit die andere Seite eine Anklopfsignal ausgesandt hat. Es kann somit im Frequenzbereich der Anteil, der auf der Nutzenergie basiert, von dem Anteil, der auf dem Anklopfsignal basiert, voneinander getrennt werden. Im Rahmen der Frequenzanalyse kann vor allem eine schnelle Fouriertransformation, eine diskrete Fourier-Transformation und/oder ein Goertzel-Filter eingesetzt werden.

Zur Einkopplung des Anklopfsignals kann vor allem ein Transformator eingesetzt werden, wobei das Anklopfsignal zuvor von einem Signalgenerator erzeugt wird. Insbesondere kann das Anklopfsignal mittels eines Transformators hinter einer Kompensationsschaltung, sprich zwischen der Spule zur Energieübertragung und der Kompensationsschaltung, oder vor der Kompensationsschaltung, sprich zwischen der Kompensationsschaltung und dem Inverter bzw. Gleichrichter, einkoppelt werden. Der Transformator überträgt das Signal induktiv, bspw. zu einer Spule der Vorrichtung, die an der entsprechenden Stelle angeordnet ist. Ferner könnte dieses direkt zur Spule zur Energieübertragung übertragen werden.

Alternativ kann einer der Konverter zur Erzeugung des Anklopfsignals beeinflusst werden, wobei dies besonders vorteilhaft ist, da dann kein separates Mittel zur Erzeugung des Anklopfsignals notwendig ist. Im Detail werden die Schalter des Konverters, gezielt gesteuert, um das Anklopfsignal zu erzeugen. Der Konverter dient vorzugsweise zum Umwandeln der Nutzenergie, die übertragen werden soll. Dies geschieht durch gezielte Steuerung der Schalter. Dabei können die Schalter so gesteuert werden, dass entweder nur das Anklopfsignal oder sowohl das Anklopfsignal als auch die Nutzenergie als Überlagerung erzeugt werden. Ein zusätzliches Mittel zur Erzeugung des Anklopfsignals ist in diesem Fall nicht notwendig.

In einem weiteren Aspekt betrifft die Erfindung eine Vorrichtung zur kontaktlosen Energieübertragung, die einen ersten und einen zweiten Energieübertragungspartner umfasst. Bevorzugterweise ist die Vorrichtung zur Durchführung des oben beschriebenen Verfahrens ausgebildet. Jeder Energieübertragungspartner umfasst mindestens eine Spule. Die Vorrichtung kann eine Erzeugungseinheit zum Erzeugen eines Anklopfsignals mit einem Wechselanteil in der Spule des ersten und/oder des zweiten Energieübertragungspartners zur Induktion einer Spannung in der Spule des jeweils anderen Energieübertragungspartners aufweisen. Die Vorrichtung umfasst eine Feststelleinheit zum Feststellen der induzierten Spannung auf Basis des Anklopfsignals in der Spule des anderen Energieübertragungspartners. In anderen Worten handelt es sich um eine Detektionseinheit zur Detektion der induzierten Spannung. In dem Sinne ist Feststellen mit Detektieren gleichzusetzen.

Bei der Feststelleinheit handelt es sich insbesondere um einen Stromsensor der vorzugsweise an einem Ausgang eines Inverters oder am Eingang des Gleichrichters des Energieübertragungspartners angeordnet sein kann.

Bei der Erzeugungseinheit kann es sich um einen Signalgenerator und einen Transformator zur Einkopplung oder um den Inverter oder den Gleichrichter des Energieübertragungspartners handeln.

Ferner kann die Vorrichtung eine Steuereinheit und eine Auswerteeinheit umfassen. Die Steuereinheit dient insbesondere dazu, basierend auf dem Feststellen einer induzierten Spannung auf Basis des Anklopfsignals beziehungsweise einer Aufnahme- und/oder Abgabebereitschaft, eine Energieübertragung zu beginnen beziehungsweise zu beenden. Die Auswerteeinheit ist insbesondere dazu ausgebildet, den gemessenen Strom und/oder die gemessene Spannung auszuwerten beziehungsweise eine Frequenzanalyse durchzuführen und die induzierte Spannung auf Basis des Anklopfsignals und/oder die Aufnahme- und/oder Abgabebereitschaft festzustellen.

**Kurze Beschreibung der Figuren**

Es zeigen in rein schematischer Darstellung:

Figur 1:  ein Verfahrensschema eines Verfahren zum Feststellen einer Aufnahme- und/oder Abgabebereitschaft von kontaktlos zu übertragender Energie;
Figur 2:  eine Vorrichtung zur kontaktlosen Energieübertragung;
Figur 3:  eine Vorrichtung zur kontaktlosen Energieübertragung;
Figur 4:  eine Vorrichtung zur kontaktlosen Energieübertragung;
Figur 5:  eine Vorrichtung zur kontaktlosen Energieübertragung;
Figur 6:  eine Vorrichtung zur kontaktlosen Energieübertragung;
Figur 7:  einen beispielhaften Stromverlauf am Inverterausgang auf der energieabgebenden Seite; und
Figur 8:  das Stromsignal bei Umwandlung in den Frequenzbereich.

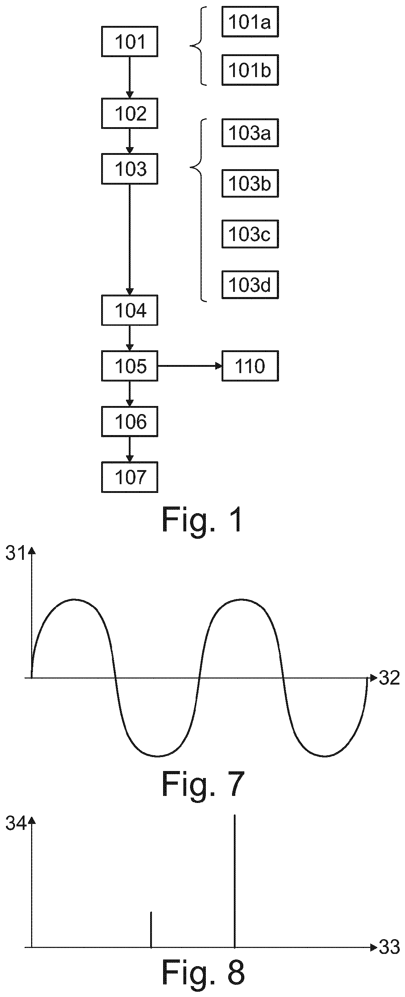

Figur 1 zeigt ein Verfahrensschema eines Verfahrens 100 zum Feststellen einer Aufnahme- und/oder Abgabebereitschaft von kontaktlos zu übertragender Energie. Das Verfahren 100 kann ein Erzeugen 101 eines Anklopfsignals mit einem Wechselanteil in einer Spule eines ersten und/oder zweiten Energieübertragungspartners umfassen. Vorzugsweise wird das Anklopfsignal mittels eines Transformators eingekoppelt 101a oder es wird durch die gezielte Beeinflussung eines Konverters des entsprechenden Energieübertragungspartners erzeugt 101b.

In Folge wird eine Spannung in der Spule des jeweils anderen Energieübertragungspartners induziert 102 und das Verfahren umfasst das Feststellen 103 der induzierten Spannung in der Spule des anderen Energieübertragungspartners auf Basis des Anklopfsignals. Die induzierte Spannung kann indirekt festgestellt werden 103a durch Messung des Stroms auf Seiten des anderen Energieübertragungspartners. Beispielsweise kann der Strom an einem Ausgang oder einem Eingang eines Konverters 15, vorzugsweise an einem Ausgang eines Inverters 15a des Energieübertragungspartners, gemessen werden 103b. Es kann auch die induzierte Spannung gemessen werden 103c, beispielsweise zwischen dem Invertereingang und dem Inverterausgang.

Es kann eine Frequenzanalyse 103d folgen, die zur Unterscheidung des Anklopfsignals und dem der Nutzenergieübertragung zugeordneten Signal dient. Somit kann festgestellt werden, ob die induzierte Spannung oder zumindest ein Anteil dieser auf dem Anklopfsignal basiert. Hierfür können dem Anklopfsignal und der Nutzenergieübertragung jeweils eine Frequenz zugeordnet sein, wobei die entsprechenden Signale orthogonal zueinander sind. Im Frequenzbereich sind die Signale somit deutlich voneinander unterscheidbar.

Wird eine induzierte Spannung auf Basis der Anklopfsignals festgestellt, wird eine Aufnahme- und/oder Abgabebereitschaft festgestellt 104. Hat bisher noch keine Übertragung von Nutzenergie stattgefunden, kann damit begonnen werden 105. Ferner kann beim Feststellen 106 eines Fehlens einer induzierten Spannung auf Basis des Anklopfsignals, die Übertragung der Nutzenergie eingestellt werden 107. Ein Anklopfsignal kann grundsätzlich vor einer Übertragung der Nutzenergie ausgesandt werden und erst im Anschluss beim Feststellen einer Aufnahmebereitschaft Nutzenergie übertragen werden, oder aber während der Energieübertragung. Auch im letzten Fall kann beim Fehlen einer induzierten Spannung auf Basis des Anklopfsignals die Energieübertragung eingestellt werden 107.

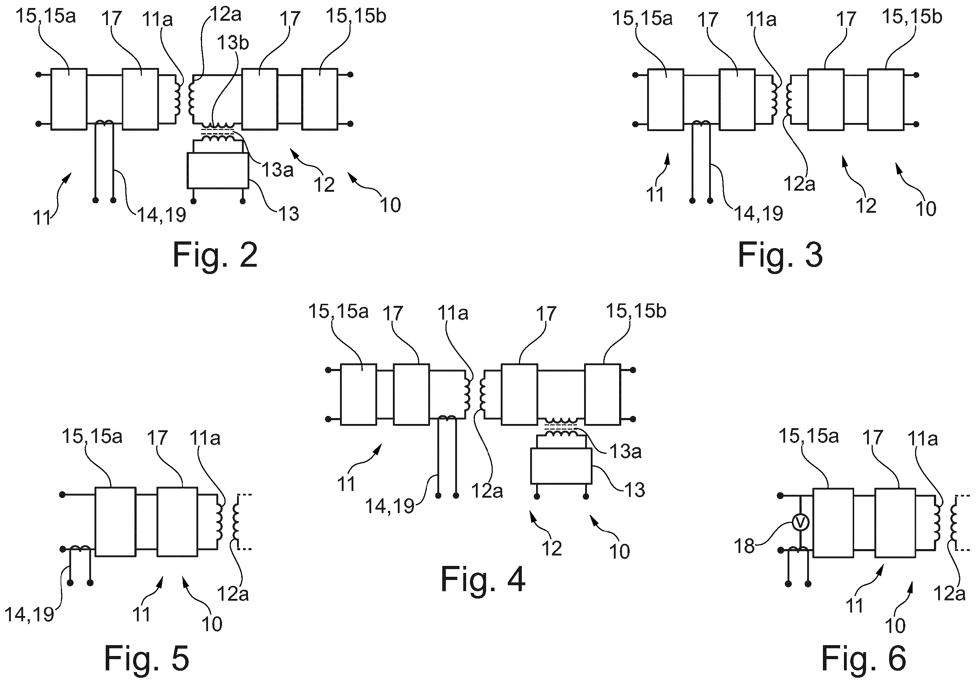

Figur 2 zeigt eine Vorrichtung 10 zur kontaktlosen Energieübertragung mit einem ersten Energieübertragungspartner 11 und einem zweiten Energieübertragungspartner 12. Beide Seiten weisen eine Spule 11a beziehungsweise 12a auf, die zur Übertragung einer Nutzenergie als auch zur Übertragung eines Anklopfsignals geeignet ist.

Ferner weist der erste Energieübertragungspartner 11 einen Konverter 15, und zwar einen Inverter 15a, auf, während der zweite Energieübertragungspartner 12 einen Konverter 15, und zwar einen Gleichrichter 15b, aufweist. Diese sind insbesondere identisch ausgebildet, sodass der Inverter als Gleichrichter fungieren kann und der Gleichrichter als Inverter. Ferner weisen beide Seiten beziehungsweise beide Energieübertragungspartner eine Kompensationsschaltung 17 auf.

In Figur 2 wird auf der Seite des zweiten Energieübertragungspartners 12 ein Anklopfsignal erzeugt, und zwar mittels einer Erzeugungseinheit 13. Schematisch ist ein Kern 13a eines Transformators und dessen Spule 13b zu sehen. Mithilfe dieser wird induktiv zur Spule 11a übertragen. In Folge wird eine Spannung induziert, die indirekt durch eine Feststelleinheit (14), und zwar einem Stromsensor 19, am Ausgang des Inverters 15 auf der Seite des ersten Energieübertragungspartners 11 gemessen wird.

In Figur 3 ist eine weitere Vorrichtung 10 zur kontaktlosen Energieübertragung gezeigt, wobei diese identisch zur Konfiguration der Figur 1 ausgebildet ist, mit dem Unterschied, dass das Anklopfsignal durch eine Beeinflussung (durch vertikalen Pfeil dargestellt) des Gleichrichters 16, und zwar der darin enthaltenen Schalter, erzeugt wird, sodass eine entsprechende separate Erzeugungseinheit 13, wie sie in Figur 1 dargestellt ist, nicht notwendig ist, sondern der Gleichrichter 16 sowohl die Nutzenergie umwandeln als auch das Anklopfsignal erzeugen kann.

In Figur 4 ist eine weitere Vorrichtung 10 zur kontaktlosen Energieübertragung gezeigt, die identisch zur Konfiguration der Figur 1 ausgebildet ist, wobei als Unterschied nun der Strom nach der Kompensationsschaltung 17 auf der Seite des ersten Energieübertragungspartners 11 gemessen wird und das Anklopfsignal zwischen der Kompensationsschaltung 17 und dem Gleichrichter 16 mittels einer Erzeugungseinheit 13. Erneut ist ein Kern 13a eines Transformators und dessen Spule 13b dargestellt.

In Figur 5 ist eine weitere Vorrichtung 10 zur kontaktlosen Energieübertragung abgebildet, wobei nun nur die Seite des ersten Energieübertragungspartners 11 gezeigt ist. Es wird eine weitere Möglichkeit zum Feststellen der induzierten Spannung gezeigt, und zwar durch einen Stromsensor 19, der vor dem Inverter 15 angeordnet ist.

Figur 6 zeigt eine weitere Vorrichtung 10 zur kontaktlosen Energieübertragung, wobei erneut nur die Seite des ersten Energieübertragungspartners 11 gezeigt ist, um eine weitere Möglichkeit zur Feststellung der induzierten Spannung auf Basis des Anklopfsignals darzustellen. Und zwar wird die induzierten Spannung durch einen Spannungsmesser 18 zwischen dem Invertereingang und dem Inverterausgang gemessen.

In Figur 7 ist ein beispielhafter Stromverlauf am Inverterausgang, und zwar der Strom 31 über die Zeit 32 gezeigt. Bei gleichzeitiger Übertragung der Nutzenergie und des Anklopfsignals ist die induzierte Spannung eine Überlagerung auf Basis beiden Signale, sodass auch der Strom eine Überlagerung unterschiedlicher Anteile ist. Es kann die Amplitude auf Basis des Anklopfsignals sehr viel kleiner sein als die Amplitude der Nutzenergie, sodass das Anklopfsignal auf Basis des Stromverlaufs schwer von dem Nutzenergie unterscheidbar ist und somit nur schwer festgestellt werden kann, ob auf Basis des entsprechenden Anklopfsignals eine Spannung induziert wurde.

Figur 8 zeigt das Stromsignal bei Umwandlung in den Frequenzbereich, und war die Amplitude 34 über die Frequenz 33. Deutlich ist zu sehen, dass bei unterschiedlichen Frequenzen unterschiedliche Amplituden zu sehen sind. Links wurde mit einer kleineren Amplitude 34 bei der Frequenz des Anklopfsignals ein Signal festgestellt, während bei der höheren Frequenz und einer größeren Amplitude 34 ein Signal auf Basis der Nutzenergie festgestellt wurde. Es kann somit durch die Frequenzanalyse deutlich eine induzierte Spannung auf Basis des Anklopfsignals festgestellt werden.

Bezugszeichen

| | | |
|---|---|---|
| 100 | Verfahren zum Feststellen einer Aufnahme- und/oder Abgabebereitschaft von kontaktlos zu übertragener Energie |
| 101 | Erzeugen eines Anklopfsignals mit einem Wechselanteil in der Spule des ersten und/oder des zweiten Energieübertragungspartners |
| 101a | Einkoppeln mittels eines Transformators |
| 101b | Erzeugung durch Beeinflussung eines Konverters |
| 102 | Induktion einer Spannung in der Spule des jeweils anderen Energieübertragungspartners |
| 103 | Feststellen der induzierten Spannung in der Spule des anderen Energieübertragungspartners auf Basis des Anklopfsignals |
| 103a | indirektes Feststellen der Spannung mittels Messung des Stroms |
| 103b | Messung des Stroms an einem Eingang oder einem Ausgang eines Konverters |
| 103c | Messung der Spannung |
| 103d | Frequenzanalyse zur Unterscheidung des Anklopfsignals und der Nutzenergie |
| 104 | Feststellen einer Aufnahme- und/oder Abgabebereitschaft |
| 105 | Beginnen einer kontaktlosen Übertragung einer Nutzenergie |
| 106 | Feststellen des Fehlens einer induzierten Spannung auf Basis des Anklopfsignals |
| 107 | Einstellen einer kontaktlosen Übertragung der Nutzenergie |
| 110 | Übertragen einer Nutzenergie |
| 10 | Vorrichtung zur kontaktlosen Energieübertragung |
| 11 | erster Energieübertragungspartner |
| 11a, 12a | Spule |
| 12 | zweiter Energieübertragungspartner |
| 13 | Erzeugungseinheit |
| 13a | Kern eines Transformators |
| 13b | Spule des Transformators |
| 14 | Feststelleinheit |
| 15 | Konverter |
| 15a | Inverter |

| | |
|---|---|
| 15b | Gleichrichter |
| 17 | Kompensationsschaltung |
| 18 | Spannungsmesser |
| 19 | Stromsensor |
| 31 | Strom |
| 32 | Zeit |
| 33 | Frequenz |
| 34 | Amplitude |

**Patentansprüche**

1. Verfahren (100) zum Feststellen (104) einer Aufnahme- und/oder Abgabebereitschaft von kontaktlos zu übertragender Energie eines Energieübertragungspartners einer Vorrichtung (10) zur kontaktlosen Energieübertragung,

   wobei die Vorrichtung (10) einen ersten Energieübertragungspartner (11) und einen zweiten Energieübertragungspartner (12) umfasst,
   wobei jeder Energieübertragungspartner mindestens eine Spule (11a, 12a) umfasst,
   **dadurch gekennzeichnet, dass**
   das Verfahren ein Feststellen (103) einer induzierten Spannung in der Spule (11a, 12a) des ersten Energieübertragungspartners (11) und/oder des zweiten Energieübertragungspartners (12) auf Basis eines Anklopfsignals des jeweils anderen Energieübertragungspartners umfasst.

2. Verfahren (100) nach Anspruch 1,
   **dadurch gekennzeichnet, dass**
   das Verfahren (100) ein Erzeugen (101) des Anklopfsignals mit dem Wechselanteil in der Spule (11a, 12a) des jeweils anderen Energieübertragungspartners (11) zur Induktion (102) einer Spannung in der Spule (11a, 12a) des ersten und/oder zweiten Energieübertragungspartners umfasst.

3. Verfahren (100) nach Anspruch 1 oder 2,
   **dadurch gekennzeichnet, dass**
   das Verfahren (100) ein Feststellen (104) einer Aufnahme- und/oder Abgabebereitschaft zur Aufnahme und/oder Abgabe von Nutzenergie umfasst, wenn eine induzierte Spannung auf Basis des Anklopfsignals festgestellt wird (103).

4. Verfahren (100) nach einem der vorangehenden Ansprüche,
   **dadurch gekennzeichnet, dass**
   das Feststellen der induzierten Spannung in der Spule des anderen Energieübertragungspartners auf Basis des Anklopfsignals vor einer kontaktlosen Übertragung (110) von Nutzenergie durchgeführt wird, wobei beim Feststellen (103) einer induzierten Spannung auf Basis des Anklopfsignals ein Energieübertragungspartner mit einer kontaktlosen Übertragung der Nutzenergie beginnt (105).

5. Verfahren (100) nach einem der vorangehenden Ansprüche,
   **dadurch gekennzeichnet, dass**
   das Feststellen der induzierten Spannung in der Spule des anderen Energieübertragungspartners auf Basis des Anklopfsignals während einer kontaktlosen Übertragung einer Nutzenergie durchgeführt wird.

6. Verfahren (100) nach Anspruch 4 oder 5,
   **dadurch gekennzeichnet, dass**
   beim Feststellen (106) eines Fehlens einer induzierten Spannung auf Basis des Anklopfsignals eine kontaktlose Übertragung der Nutzenergie eingestellt wird (107).

7. Verfahren (100) nach einem der Ansprüche 4 bis 6,
   **dadurch gekennzeichnet, dass**
   die Nutzenergie und das Anklopfsignal jeweils eine Frequenz aufweisen, wobei die Frequenzen orthogonal zueinander sind.

8. Verfahren (100) nach einem Anspruch 7,
   **dadurch gekennzeichnet, dass**

die Frequenzen ein zumindest im Wesentlichen gebrochen-rationales Verhältnis zueinander aufweisen.

9. Verfahren (100) nach einem der vorangehenden Ansprüche,
**dadurch gekennzeichnet, dass**
die induzierte Spannung indirekt durch Messung eines Strom auf Seiten des jeweils anderen Energieübertragungspartners festgestellt wird (103a).

10. Verfahren (100) nach Anspruch 9,
**dadurch gekennzeichnet, dass**
jeder Energieübertragungspartner ein Konverter (15) umfasst, wobei der Strom an einem Ausgang oder einem Eingang des Konverters (15) gemessen wird.

11. Verfahren (100) nach einem der vorangehenden Ansprüche,
**dadurch gekennzeichnet, dass**
das Verfahren eine Frequenzanalyse (103d) zur Unterscheidung eines Anteils der induzierten Spannung basierend auf dem Anklopfsignal und eines Anteils basierend auf der Nutzenergie umfasst.

12. Verfahren (100) nach einem der vorangehenden Ansprüche,
**dadurch gekennzeichnet, dass**
das Anklopfsignal mittels eines Signalgenerators erzeugt und mittels eines Transformators eingekoppelt wird (101a).

13. Verfahren (100) nach einem der Ansprüche 1 bis 11,
**dadurch gekennzeichnet, dass**
das Anklopfsignal durch Beeinflussung eines Konverters des Energieübertragungspartners erzeugt wird (101b).

14. Vorrichtung (10) zur kontaktlosen Energieübertragung,

wobei die Vorrichtung (10) einen ersten Energieübertragungspartner (11) und einen zweiten Energieübertragungspartner (12) umfasst, wobei jeder Energieübertragungspartner mindestens eine Spule (11a, 11b) umfasst,
**dadurch gekennzeichnet, dass**
die Vorrichtung (10) eine Feststelleinheit (14) zum Feststellen einer induzierten Spannung in der Spule (11a, 12a) des ersten Energieübertragungspartners (11) und/oder des zweiten Energieübertragungspartners (12) auf Basis eines Anklopfsignals des jeweils anderen Energieübertragungspartners umfasst.

101

101a

101b

102

103

103a

103b

103c

103d

104

105 → 110

106

107

# Fig. 1

31

32

# Fig. 7

34

33

# Fig. 8

Fig. 2

Fig. 3

Fig. 4

Fig. 5

Fig. 6

EP 4 654 436 A1

Europäisches Patentamt
European Patent Office
Office européen des brevets

# EUROPÄISCHER RECHERCHENBERICHT

Nummer der Anmeldung

EP 25 17 0535

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2012/112543 A1 (VAN WAGENINGEN ANDRIES [DE] ET AL) 10. Mai 2012 (2012-05-10)<br>* Absätze [0003] - [0005], [0008], [0013], [0044], [0046], [0059] - [0062], [0067] *<br>----- | 1-4,7,9, 14<br>5,6,8, 10-13 | INV.<br>H02J50/10<br>H02J50/80 |
| X | DE 10 2020 133178 A1 (AVAGO TECH INT SALES PTE LID [SG]) 17. Juni 2021 (2021-06-17)<br>* Absätze [0013], [0014], [0054], [0055], [0088] - [0090]; Abbildungen 1,3,5,8,14 *<br>----- | 1-4,14 | |
| X | US 2020/343773 A1 (JOYE NEIL FRANCIS [NL] ET AL) 29. Oktober 2020 (2020-10-29)<br>* Absätze [0124] - [0143]; Abbildungen 2-4,7 *<br>----- | 1,14 | |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 22. September 2025 | Hanisch, Thomas |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 25 17 0535

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2025

| Im Recherchenbericht angeführtes Patentdokument | Datum der Veröffentlichung | Mitglied(er) der Patentfamilie | Datum der Veröffentlichung |
|---|---|---|---|
| US 2012112543 A1 | 10-05-2012 | BR 112012000665 A2 | 05-09-2017 |
| | | CN 102484387 A | 30-05-2012 |
| | | EP 2454799 A2 | 23-05-2012 |
| | | JP 5792168 B2 | 07-10-2015 |
| | | JP 2013527735 A | 27-06-2013 |
| | | KR 20120052291 A | 23-05-2012 |
| | | RU 2012104835 A | 20-08-2013 |
| | | US 2012112543 A1 | 10-05-2012 |
| | | WO 2011007300 A2 | 20-01-2011 |
| DE 102020133178 A1 | 17-06-2021 | CN 112994753 A | 18-06-2021 |
| | | DE 102020133178 A1 | 17-06-2021 |
| US 2020343773 A1 | 29-10-2020 | CN 106464307 A | 22-02-2017 |
| | | EP 3127248 A1 | 08-02-2017 |
| | | EP 3322101 A1 | 16-05-2018 |
| | | JP 6216084 B2 | 18-10-2017 |
| | | JP 2017520223 A | 20-07-2017 |
| | | US 2017093222 A1 | 30-03-2017 |
| | | US 2018123401 A1 | 03-05-2018 |
| | | US 2020343773 A1 | 29-10-2020 |
| | | WO 2015193209 A1 | 23-12-2015 |

EPO FORM P0461

Für nähere Einzelheiten zu diesem Anhang : siehe Amtsblatt des Europäischen Patentamts, Nr.12/82